# FASCICULE DE BREVET EUROPEEN

(11) **EP 1 634 223 B1**
(45) Date de publication et mention de la délivrance du brevet: **13.03.2013**
(21) Numéro de dépôt: 04767227.4
(22) Date de dépôt: 02.06.2004
(51) Int. Cl.: G06K 19/077, G06K 19/04

(54) **CARTE MULTICOUCHE EN MATERIAU THERMOPLASTIQUE ET PROCEDE DE SECURISATION DE CARTE MULTICOUCHE**
MEHRSCHICHTIGE KARTE AUS THERMOPLASTISCHEM MATERIAL UND VERFAHREN ZUR BEFESTIGUNG DER MEHRSCHICHTIGEN KARTE
MULTILAYER CARD MADE OF THERMOPLASTIC MATERIAL, AND METHOD FOR SECURING THE MULTILAYER CARD

(30) Priorité: 05.06.2003 FR 0306780
(43) Date de publication de la demande: 15.03.2006
(73) Titulaire: Morpho, 75015 Paris (FR)
(72) Inventeur: MONTEILLIET, Gilles, F-95450 Us (FR)
(74) Mandataire: Lavialle, Bruno François Stéphane
(86) Numéro de dépôt international: PCT/FR2004/001356
(87) Numéro de publication internationale: WO 2005/004048

(56) Documents cités:
- EP-A- 0 488 574
- EP-A- 0 527 438
- US-A- 4 313 984

## Description

La présente invention concerne une carte multicouche en matériau thermoplastique utilisable notamment comme un support de données. Une telle carte peut servir par exemple à justifier l'identité du détenteur de la carte ou à contrôler l'accès à un lieu. L'invention a également pour objet un procédé de sécurisation d'une carte multicouche utilisable par exemple comme support de données.

### ARRIERE PLAN DE L'INVENTION

On connaît des cartes multicouches comportant une couche de coeur, formant le corps de la carte, une couche imprimée sur laquelle figurent les données et qui s'étend sur la couche de coeur, et une couche transparente de protection qui s'étend sur la couche imprimée. La couche de coeur et la couche de protection sont généralement réalisées à partir de polyéthylène téréphtalate qui est un matériau résistant aux agressions extérieures et relativement peu coûteux. La couche imprimée est réalisée en polychlorure de vinyle qui est un matériau particulièrement bien adapté à l'impression.

Une telle carte est réalisée par laminage. Or, avec ce procédé, l'adhésion de la couche de protection en polyéthylène téréphtalate sur la couche imprimée en poly-chlorure de vinyle est relativement faible de sorte qu'il existe un risque qu'une personne non autorisée décolle la couche de protection de la couche imprimée pour falsifier les données figurant sur cette dernière.

Pour obvier à cet inconvénient, il est connu de réaliser une couche de protection fragmentée. La couche de protection ne peut alors être retirée en une seule pièce, ce qui complique son retrait et sa remise en place. Cependant, cette fragmentation complique également la fabrication de la carte.

US 4313984 décrit une carte multicouche comportant une couche de protectiion et une couche de coeur.

### OBJET DE L'INVENTION

Un but de l'invention est de proposer un moyen rendant plus difficile la falsification des données sans compliquer excessivement la fabrication de la carte.

### BREVE DESCRIPTION DE L'INVENTION

A cet effet, on prévoit, selon l'invention, une carte multicouche selon la revendication 1.

Ainsi, la zone de liaison renforcée s'oppose au décollement des deux couches. Avantageusement, la liaison renforcée a une résistance mécanique supérieure à celle d'au moins une des couches. Ainsi, lors d'une tentative de décollement, cette couche se détériore avant que la liaison renforcée ne cède. La détérioration de la couche interdit sa remise en place et révèle la tentative de falsification.

Selon un mode,de réalisation particulier, une couche imprimée s'étendant entre la couche protection et la couche de coeur, la zone de liaison renforcée s'étend au travers de la couche imprimée entre la couche de protection et la couche de coeur.

Ainsi, lorsque la liaison entre la couche imprimée et la couche de protection ou la couche de coeur est relativement faible après laminage, le moyen de liaison renforcée établit une solidarisati n directe de la couche de protection et de la couche de coeur.

Avantageusement alors, les couches de protection et de coeur sont dans un même matériau thermoplastique ou dans des matériaux soudables l'un sur l'autre, et au moins la couche de protection comprend une portion qui traverse la couche et est soudée à une portion correspondante de la couche de coeur.

La liaison renforcée est alors réalisée simplement par soudage.

De préférence, la carte comportant au moins deux bords contigus formant un angle entre eux, la zone de liaison renforcée est disposée au voisinage de l'intersection des deux bords.

Dans les cartes de l'art antérieur comportant deux bords contigus, il est plus facile de décoller les deux couches l'une de l'autre à partir de l'intersection des deux bords. Le positionnement de la zone de liaison renforcée dans le voisinage de l'intersection des deux bords de la carte selon l'invention permet de limiter le décollement possible avec un nombre limité de zones de liaison renforcée.

L'invention a également pour objet un procédé de sécurisation de carte multicouche selon la revendication 5.

D'autres caractéristiques et avantages de l'invention ressortiront à la lecture de la description qui suit d'un mode de mise en oeuvre particulier non limitatif de l'invention.

### BREVE DESCRIPTION DES DESSINS

Il sera fait référence aux dessins annexés, parmi lesquels :

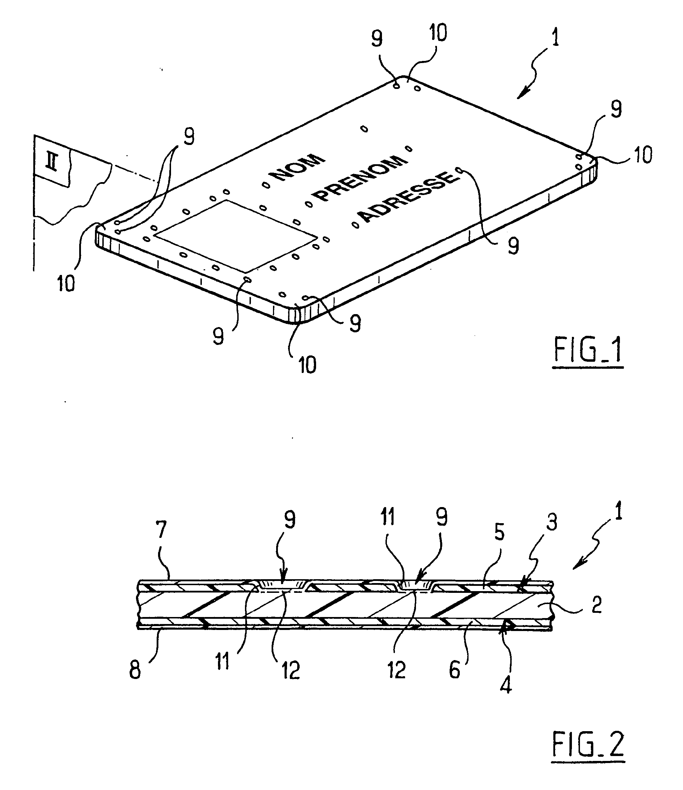

- la figure 1 est une vue en perspective d'une carte conforme à l'invention,
- la figure 2 est une vue schématique partielle et agrandie de cette carte en coupe selon le plan II de la figure 1.

### DESCRIPTION DETAILLEE DE L'INVENTION

L'invention est ici décrite en application à une carte formant un support de données d'identification du porteur de la carte. Une telle carte peut être utilisée à des fins de vérification d'identité ou de contrôle d'accès à un local. L'invention est également applicable à des cartes bancaires, des cartes de téléphone, ou tout autre carte destinée à supporter des données.

Les données peuvent être imprimées sur la carte de manière directement lisible et/ou être contenues dans une piste magnétique, un circuit intégré, ou un code barre lisibles par des moyens de lecture dédiées.

En référence aux figures, la carte, généralement désignée en 1, est multicouche et a un contour rectangulaire.

La carte 1 comprend une couche de coeur 2, en polyéthylène téréphtalate (PET) ayant des faces 3, 4 sur lesquelles s'étendent des couches imprimées 5, 6 en polychlorure de vinyle (PVC). Chaque couche imprimée 5, 6 est recouverte d'une couche de protection 7, 8 en polyéthylène téréphtalate.

Sur les faces 3, 4 de la couche de coeur 2 peuvent être imprimés un décor et des informations générales relatives par exemple à l'autorité ou à l'organisme ayant délivré la carte.

Sur la couche imprimée 7 sont imprimées par exemple des données personnelles du porteur de la carte, telles que, ici, ses nom, prénoms, adresse et une photo de celui-ci ou tout autre donnée permettant son identification. Peuvent également être imprimées sur cette couche des informations concernant l'étendue des droits conférés par la carte, une date d'expiration de la carte, un hologramme de sécurisation, etc... Sur la couche imprimée 8 sont par exemple imprimées des informations concernant l'organisme ayant délivré la carte ou un code-barre ou tout autre type d'informations.

Les couches de protection 7, 8 sont résistantes aux agressions extérieures et assurent une protection des informations imprimées sur les couches imprimées 5, 6 contre un effacement ou une altération due à ces agressions.

La carte 1 comprend en outre des zones de liaison renforcée 9 qui s'étendent au travers de la couche imprimée 5 entre la couche de coeur 2 et la couche de protection 7. Les zones de liaison renforcée 9 s'étendent ici au voisinage de l'intersection 10 des bords contigus de la carte (c'est-à-dire ici aux quatre coins de la carte 1), autour de la photographie et sur l'ensemble de la surface de la carte 1 en répartition régulière.

Chaque zone de liaison renforcée 9 est constituée par une portion 11 de la couche de protection 7 qui traverse la couche imprimée 5 et est soudée à une portion correspondante 12 de la face 3 de la couche de coeur 2.

Les zones de liaison renforcée 9 peuvent être réalisées lors de la fabrication de la carte ou après que la carte ait été fabriquée dans le cadre d'un procédé de sécurisation.

Lors de la fabrication de la carte, il est réalisé de façon connue en elle-même un laminage des couches 2, 5, 6, 7 et 8 les unes sur les autres pour assurer une solidarisation desdites couches. Les couches 2, 5, 6, 7, 8 peuvent se présenter sous forme de plaques ou de bandes dans lesquelles sont délimités plusieurs emplacements de cartes qui seront par la suite découpés pour individualiser les cartes. Une fabrication à l'unité est également envisageable. L'impression des couches 2, 5 et 6 est ici réalisée préalablement au laminage.

Après laminage, il est procédé à la sécurisation de la carte individualisée ou simultanément de plusieurs cartes.

Il est effectué l'étape de réaliser localement des liaisons supplémentaires entre la couche de coeur 2 et la couche de protection 7. Les liaisons supplémentaires sont formées directement entre la couche de coeur 2 et la couche de protection 7, au travers de la couche imprimée 5. Ces liaisons supplémentaires forment les zones de liaison renforcée 9 décrites ci-dessus.

Ces liaisons sont réalisées par soudage, au moyen d'un poinçon chauffant, de manière à presser et souder l'une contre l'autre les portions en regard de la couche de coeur 2 et de la couche de protection 7. Les paramètres du soudage, la température de chauffage et la pression notamment, sont choisis de manière à provoquer un ramollissement de la couche imprimée 5 de telle façon que les portions 10, 11 à souder puissent être mises au contact l'une avec l'autre au travers de la couche imprimée 5 dont le matériau flue sous la pression exercée par le poinçon chauffant.

On constate que cette opération laisse une déformation plastique superficielle sur la face externe de la couche de protection 7. Les zones de liaison renforcée 9 peuvent alors être organisées selon un motif assurant lui-même une fonction de sécurisation. De la même manière, le poinçon chauffant peut présenter une empreinte ayant la forme d'un sceau pour réaliser un marquage de la face externe de la couche de protection 7.

Le procédé de sécurisation conforme à l'invention peut être mis en oeuvre par exemple sur des plaques ou bandes regroupant plusieurs emplacements de carte ou sur une carte multicouche laminée déjà réalisée.

Bien entendu, l'invention n'est pas limitée au mode de réalisation décrit et on peut y apporter des variantes de réalisation sans sortir du cadre de l'invention tel que défini par les revendications.

En particulier, des liaisons renforcées peuvent également être ménagées entre la couche de coeur 2 et la couche de protection 8 ou entre des couches internes de la carte.

En outre, le nombre de couches de la carte peut être différent de celui du mode de réalisation décrit. Ainsi, l'invention s'applique également aux cartes multicouches qui comprendraient une couche de coeur 2 sur laquelle sont imprimées les informations à protéger et qui seraient directement recouvertes par des couches de protection.

De plus, la liaison renforcée peut être réalisée par soudage thermique comme décrit ci-dessus, par soudage à ultrasons, laser, friction ou chimiquement au moyen de solvants. Une colle, ou plus généralement un adhésif, peut également être utilisée.

Par ailleurs, les matériaux utilisés peuvent être différents de ceux décrits. Dans le cas du mode de réalisation par soudage, les matériaux des couches de coeur et de protection, s'ils sont différents, sont soudables l'un sur l'autre.

On notera que l'invention peut être mise en oeuvre de façon symétrique et permet donc de protéger des informations ou des données aussi bien au verso qu'au recto de la carte.

## Revendications

1. Carte multicouche en matériau thermoplastique comportant une couche de protection (7) et une couche de coeur (2), les couches étant solidaires l'une de l'autre, **caractérisée en ce qu'**elle comporte au moins une zone de liaison renforcée (9) réalisée par soudage entre la couche de protection et la couche de coeur.

2. Carte multicouche selon la revendication 1, **caractérisée en ce qu'**elle comporte une couche imprimée (5) s'étendant entre la couche de protection (7) et la couche de coeur (2), la zone de liaison renforcée (9) s'étend au travers de la couche imprimée entre la couche de protection et la couche de coeur.

3. Carte multicouche selon la revendication 2, **caractérisée en ce que** la couche de protection et la couches de coeur (7,2) sont dans un même matériau thermoplastique ou dans des matériaux soudables l'un sur l'autre et au moins la couche de protection comprend une portion (11) qui traverse la couche imprimée (5) et est soudée à une portion correspondant (12) de la couche de coeur.

4. Carte multicouche selon l'une quelconque des revendications précédentes, **caractérisée en ce que**, la carte comportant au moins deux bords contigus formant un angle entre eux, la zone de liaison renforcée (9) est disposée au voisinage de l'intersection (11) des deux bords.

5. Procédé de sécurisation de carte multicouche comportant au moins une couche de protection (7) et une couche de coeur (2) de matériau thermoplastique qui sont solidarisées par laminage, **caractérisé en ce qu'**il comprend, postérieurement au laminage, l'étape de réaliser localement au moins une liaison supplémentaire (9) entre la couche de protection (7) et la couche de coeur (2).

6. Procédé de réalisation selon la revendication 5, **caractérisé en ce que**, une couche imprimée (5) s'étendant entre la couche de protection (7) et la couche de coeur (2), la liaison supplémentaire (9) est réalisée directement entre la couche de protection et la couche de coeur.

7. Procédé de réalisation selon la revendication 5 ou la revendication 6, **caractérisé en ce que** la liaison supplémentaire (9) est réalisée par soudage en pressant et en soudant l'une contre l'autre des portions (11,12) en regard de la couche de protection (7) et de la couche de coeur (2).

8. Procédé de réalisation selon la revendication 7, une couche imprimée (5) s'étendant entre la couche de protection (7) et la couche (2) de coeur, **caractérisé en ce que** des paramètres du soudage sont choisis de manière à provoquer un ramollissement de la couche imprimée de telle manière que les portions à souder puissent être mises en contact l'une avec l'autre au travers de la couche imprimée.

9. Procédé de réalisation selon la revendication 7 ou la revendication 8, **caractérisé en ce que** le soudage est réalisé de manière à laisser une déformation plastique superficielle sur une face externe de la couche de protection (7) et / ou de la couche de coeur (2).

## Claims

1. A multilayer card of thermoplastic material comprising a protective layer (7) and a core layer (2) secured to each other, **characterized in that** the card include at least one reinforced bonding zone (9) realized by welding between the protective layer and the core layer.

2. A multilayer card according to claim 1, **characterized in that** it includes a printed layer (5) extending between the protective layer (7) and the core layer (2), the reinforced bonding zone (9) extending through the printed layer between the protective layer and the core layer.

3. A multilayer card according to claim 2, wherein the protective layer and the core layer (7, 2) are made of the same thermoplastic material or of thermoplastic materials that are weldable to each other, and at least the protective layer includes a portion (11) passing through the printed layer (5) and welded to a corresponding portion (12) of the core layer.

4. A multilayer card according to claim 1, wherein the card includes at least two contiguous edges forming an angle between each other, and the reinforced bonding zone (9) is located in the vicinity of the intersection (11) between the two edges.

5. A method of making secure a multilayer card comprising at least a protective layer (7) and a core layer (2) of thermoplastic material together that are bonded together by lamination, the method including, after the lamination, the step of locally forming at least one additional bond (9) between the protective layer (7) and the core layer (2).

6. A method according to claim 5, wherein a printed layer extends between the protective layer (7) and the core layer (2), the additional bond (9) being made directly between the protective layer and the core layer.

7. A method according to claim 5 or claim 6, wherein the additional bond (9) is made by welding by pressing and welding together facing portions (11, 12) of the protective layer (7) and of the core layer (2).

8. A method according to claim 7, in which a printed layer (5) extends between the protective layer (7) and the core layer (2), and wherein the welding parameters are selected in such a manner as to cause the printed layer to soften in such a manner that the portions for welding together can be brought into contact with each other through the printed layer.

9. A method according to claim 7 or claim 8, wherein welding is performed in such a manner as to leave plastic deformation in the surface of an outside face of at least one of the protective layer (7) and/or of the core layer (2).

## Patentansprüche

1. Mehrschichtige Karte aus thermoplastischem Material, umfassend eine Schutzschicht (7) und eine Kernschicht (2), wobei die Schichten fest miteinander verbunden sind, **dadurch gekennzeichnet, dass** die Karte mindestens eine verstärkte Verbindungszone (9) aufweist, die durch Schweißen zwischen der Schutzschicht und der Kernschicht hergestellt wird.

2. Mehrschichtige Karte nach Anspruch 1, **dadurch gekennzeichnet, dass** sie eine bedruckte Schicht (5) umfasst, die sich zwischen der Schutzschicht (7) und der Kernschicht (2) erstreckt, und dass sich die verstärkte Verbindungszone (9) durch die bedruckte Schicht zwischen der Schutzschicht und der Kernschicht erstreckt.

3. Mehrschichtige Karte nach Anspruch 2, **dadurch gekennzeichnet, dass** sich die Schutzschicht und die Kernschicht (7, 2) in einem gleichen thermoplastischen Material oder in Materialien befinden, die aufeinander geschweißt werden können, und dass zumindest die Schutzschicht einen Abschnitt (11) umfasst, der die bedruckte Schicht (5) durchdringt, und der an einen entsprechenden Abschnitt (12) der Kernschicht geschweißt ist.

4. Mehrschichtige Karte nach einem der vorhergehenden Ansprüche, **dadurch gekennzeichnet, dass** die Karte mindestens zwei aneinandergrenzende Ränder umfasst, die miteinander einen Winkel bilden, und dass die verstärkte Verbindungszone (9) nahe dem Schnittpunkt (11) der beiden Ränder angeordnet ist.

5. Verfahren zur Sicherung der mehrschichtigen Karte, die mindestens eine Schutzschicht (7) und eine Kernschicht (2) aus thermoplastischem Material umfasst, die durch Laminieren miteinander verbunden sind, **dadurch gekennzeichnet, dass** das Verfahren nach dem Laminieren den Schritt umfasst, lokal mindestens eine zusätzliche Verbindung (9) zwischen der Schutzschicht (7) und der Kernschicht (2) herzustellen.

6. Herstellungsverfahren nach Anspruch 5, **dadurch gekennzeichnet, dass** sich zwischen der Schutzschicht (7) und der Kernschicht (2) eine bedruckte Schicht (5) erstreckt und dass die zusätzliche Verbindung (9) direkt zwischen der Schutzschicht und der Kernschicht hergestellt ist.

7. Herstellungsverfahren nach Anspruch 5 oder 6, **dadurch gekennzeichnet, dass** die zusätzliche Verbindung (9) durch Schweißen hergestellt wird, indem man einander gegenüberliegende Abschnitte (11, 12) der Schutzschicht (7) und der Kernschicht (2) gegeneinander presst und verschweißt.

8. Herstellungsverfahren nach Anspruch 7, bei dem sich zwischen der Schutzschicht (7) und der Kernschicht (2) eine bedruckte Schicht (5) erstreckt, **dadurch gekennzeichnet, dass** Schweißparameter so ausgewählt werden, dass sie eine Aufweichung der bedruckten Schicht bewirken, so dass die zu verschweißenden Abschnitte durch die bedruckte Schicht hindurch miteinander in Kontakt gebracht werden können.

9. Herstellungsverfahren nach Anspruch 7 oder 8, **dadurch gekennzeichnet, dass** das Schweißen so realisiert wird, dass auf einer Außenseite der Schutzschicht (7) und/oder der Kernschicht (2) eine oberflächliche plastische Deformation belassen wird.
